# EUROPÄISCHE PATENTSCHRIFT

(11) **EP 1 806 254 B1**
(45) Veröffentlichungstag und Bekanntmachung des Hinweises auf die Patenterteilung: **05.06.2013**
(21) Anmeldenummer: 07000106.0
(22) Anmeldetag: 04.01.2007
(51) Int. Cl.: B60J 7/057, B60J 7/12, F15B 15/28, E05F 15/04

(54) **Vorrichtung zur Ermittlung und Steuerung der Position eines Cabriodaches**
Device for determining and controlling the position of the roof of a convertible
Dispositif destiné à la détermination et la commande de la position d'un toit de cabriolet

(30) Priorität: 09.01.2006 DE 102006001472
(43) Veröffentlichungstag der Anmeldung: 11.07.2007
(73) Patentinhaber: Rausch und Pausch GmbH, 95100 Selb (DE)
(72) Erfinder: Wagner, Tobias, 21149 Hamburg (DE); Haltermann, Frank, 21258 Heidenau (DE)
(74) Vertreter: Donath, Dirk

(56) Entgegenhaltungen:
- WO-A-02/098692
- DE-A1- 10 329 044
- DE-U1- 20 016 498
- US-A- 3 821 845
- US-A- 5 225 747

## Beschreibung

Vorrichtung zur Ermittlung und Steuerung der Position eines Cabriodaches

Die Erfindung betrifft eine Vorrichtung zur Ermittlung und Steuerung der Position eines Cabriodaches gemäß der Gattung der Patentansprüche.

Heutige Cabriodächer sind mit Antriebsanlagen ausgestattet, die eine vollautomatische Betätigung ermöglichen. Hierzu werden Motoren für die verschiedenen Einzelbewegungen des Daches in der Kinematik angeordnet und über eine elektronische Schaltung gesteuert.

So offenbart bspw. DE 101 11 705 A1 ein Cabriosystem mit komplexen Mehrgelenkkinematiken, die in der Regel von Hydraulikzylindern angetrieben werden und die Drehbewegungen mit Lenkern auf die zu bewegenden Dachteile übertragen.

Aus der EP 1 160 113 A2 ist die Verwendung von Schwenkmotoren als Aktuatoren bekannt, die im Hauptlager an der Karosserie fest und/oder an wichtigen Gelenkstellen zwischen den starren Dachteilen beweglich angeordnet sind und elektrisch oder hydraulisch angetrieben werden.

Die DE 199 52 590 A1 offenbart zur Ermittlung und Steuerung der Position eines Cabriodaches eine Vorrichtung mit der die Position der beweglichen Hydraulikelemente und damit des Verdecks zuverlässig und präzise erfasst wird, indem jedem Hydraulikelement ein als restriktiver Wegaufnehmer ausgebildeter Sensor zugeordnet ist, der in der hohlgebohrten Kolbenstange des Kolbens des Hydraulikzylinders integriert ist und dessen Ausgangssignaländerung (Ausgangsspannungsänderung) von einer Steuereinheit ausgewertet wird.

Aus der DE 199 18 628 A1 ist eine Kolbenstangenbetriebene Dachkinematik bekannt, wobei die Gelenkhebelstellung dieser Kinematik vermittels abfühlender Mikroschalter oder Potentiometer delektiert und als Signale an einen Mikroprozessor zur Steuerung der ausfahrenden und der zurückziehenden Bewegung der Kolbenstange weitergeleitet werden.

Die gattungsbildende US 5,225,747 offenbart eine Anordnung mit einem Messmittel in Form eines Sensors, wie bspw. auch einem Potentiometer, das auf einer Drehachse angeordnet ist und zur Ermittlung und Steuerung der Position eines Cabriodaches dient.

Der Nachteil aller bisher bekannten Messmittel ist, dass diese in den Dachkinematiken einen umfänglichen Bauraum benötigen, wobei der Bauraum an sich bereits sehr bemessen ist, und auf Grund ihrer Ausgestaltung recht störanfällig sind.
Zudem bestehen die Gehäuse der meisten Messmittel aus Kunststoff, so dass im Montageverlauf sowie im Betrieb des Daches eine große Beschädigungsgefahr mit dem Risiko besteht, dass bei beschädigten Sensoren das Dach unkontrolliert weiter betätigt wird.

Aufgabe der Erfindung ist es somit, eine Vorrichtung zur Ermittlung und Steuerung der Position eines Cabriodaches anzugeben, die die zuvor stehenden Nachteile des Standes der Technik vermeidet.
Diese Aufgabe wird durch eine Vorrichtung zur Ermittlung und Steuerung der Position eines Cabriodaches gemäß Anspruch 1 gelöst. Vorteilhafte Ausgestaltungen werden in den nachgeordneten Ansprüchen angegeben.

Das Wesen der Erfindung besteht darin, dass die Vorrichtung zur Ermittlung und Steuerung der Position eines Cabriodaches aus einem dünnen Folienpotentiometer, welches auf der Drehachse eines Dachteils angeordnet ist, sowie einer Steuereinheit besteht, die die Ausgangssignaländerung (Ausgangsspannungsänderung) des Folienpotentiometers erfasst, auswertet und steuernd / regelnd in die Bewegung des Dachkinematikmotors eingreift.

Besonders vorteilhaft dabei ist das dünne Folienpotentiometer zwischen zwei Lenkern angeordnet.

Die Erfindung wird nachstehend an Hand der schematischen Zeichnung näher erläutert. Es zeigen:
Fig. 1a: eine erste Ausführungsform der erfindungsgemäßen Vorrichtung zur Ermittlung und Steuerung der Position eines Cabriodaches in einer schematischen Seitenansicht,
Fig. 1b: die Ausführungsform der erfindungsgemäßen Vorrichtung gemäß Fig. 1a in einer Schnittdarstellung,
Fig. 2: eine zweite Ausführungsform der erfindungsgemäßen Vorrichtung in einer Schnittdarstellung und
Fig. 3: eine dritte Ausführungsform der erfindungsgemäßen Vorrichtung in einer Schnittdarstellung.

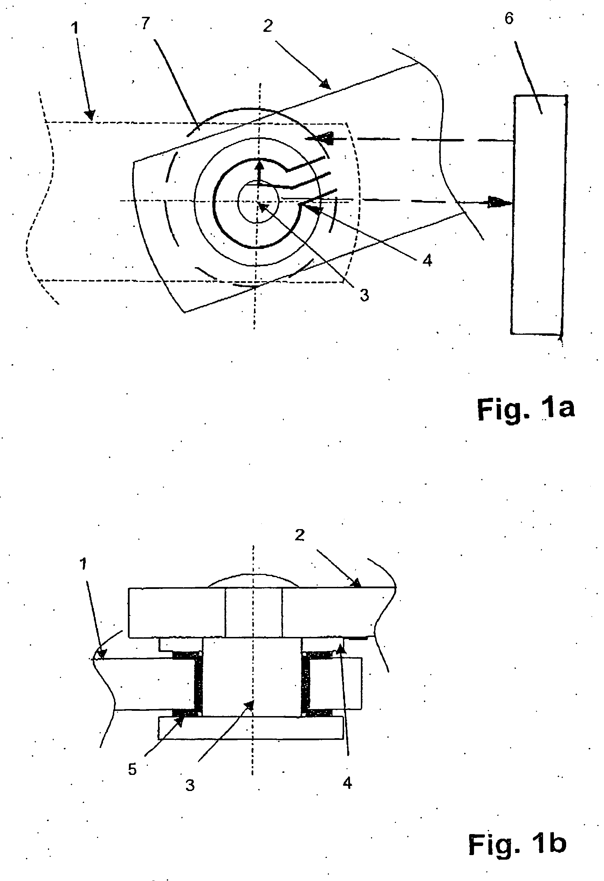

Die in Fig. 1 dargestellte Vorrichtung zur Ermittlung und Steuerung der Position eines Cabriodaches besteht aus einem Folienpotentiometer 4, dass ringförmig um eine Drehachse 3 eines Dachteils positioniert ist, welche einen ersten Lenker 1 und einen zweiten Lenker 2 verbindet, wobei das Folienpotentiometer 4 mit dem Lenker 1 oder Lenker 2 fest verbunden ist und mit einer Steuereinheit 6 signalleitend in Verbindung steht, die die Ausgangssignaländerung (Ausgangsspannungsänderung) des Folienpotentiometer erfasst, auswertet und dem entsprechend die Bewegung eines Dachkinematikmotors 7 steuert/regelt.

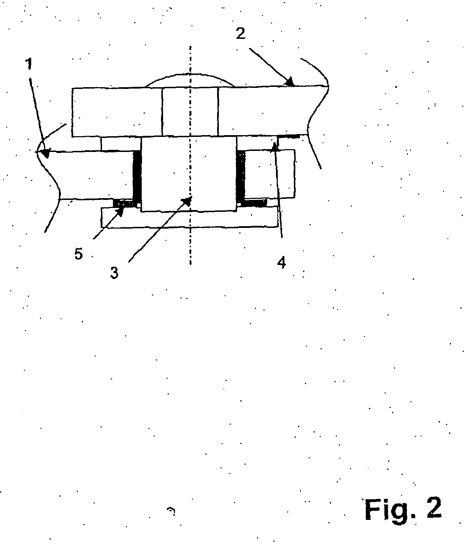

Das Folienpotentiometer 4 kann dabei unter Last mit einer Laufbuchse 5 verbunden (in Fig. 1b dargestellt) bzw. integrativer Bestandteil einer Laufbuchse 5 sein (in Fig. 2 dargestellt), die die Drehachse 3 lagert.

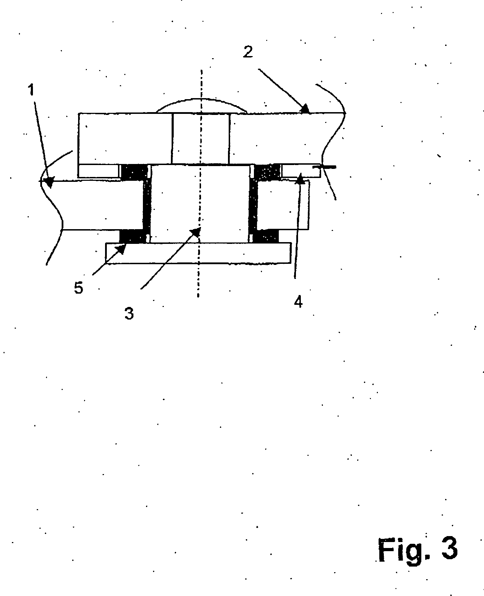

Alternativ dazu kann das ringförmige Folienpotentiometer 4 lastfrei als äußerer Ring um die Laufbuchse 5 angeordnet sein (in Fig. 3 dargestellt).

Das erfindungsgemäße Folienpotentiometer ist vorteilhafter Weise ca. 1 mm dick bzw. dünner und ist bspw. auf der Drehachse eines Dachteils angebracht.

Durch die Widerstandsveränderung des Folienpotentiometers 4 während der Drehbewegung einer Achse der Dachkinematik erfolgt eine ständige Signalübertragung an die Steuereinheit 6, die die Signaländerung ausgewertet und steuernd /regelnd in den Bewegungsablauf des Motors 7 der Dachkinematik, bspw. eines Elektromotors, eingreift.

Besonders die vorteilhafte Anordnung des Folienpotentiometers 4 zwischen zwei Lenkern 1 und 2, die sich zueinander bewegen, führt dazu, dass der Folienpotentiometer keiner Beschädigungsgefahr ausgesetzt ist. Da das Potentiometer als Folie flexibel ausgeführt ist, wird ein Bruch bei der Montage oder bei Betrieb des Cabriodaches ausgeschlossen. Dies wiederum führt zur Vermeidung von sensorbeschädigungsbedingten Fehlfunktionen des Daches.
Gleichzeitig benötigt das Folienpotentiometer 4 der erfindungsgemäßen Vorrichtung zur Ermittlung und Steuerung der Position eines Cabriodaches keinen zusätzlichen Bauraum.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszeichenliste

| | |
|---|---|
| 1 | - erster Lenker |
| 2 | - zweiter Lenker |
| 3 | - Drehachse |
| 4 | - Folienpotentiometer |
| 5 | - Laufbuchse |
| 6 | - Steuereinheit |
| 7 | - Dachkinematikmotor |

## Patentansprüche

1. Vorrichtung zur Ermittlung und Steuerung der Position eines Cabriodaches bestehend aus einem Potentiometer (4), einer Steuereinheit (6) und einem Dachkinematikmotor (7), wobei vermittels des Potentiometers (4) Signale ermittelbar und an die Steuereinheit (6) weiter leitbar sind und der Dachkinematikmotor (7) durch die Steuereinheit (6) regelbar ist, **dadurch gekennzeichnet, dass** das Potentiometer (4) ein Folienpotentiometer ist.

2. Vorrichtung zur Ermittlung und Steuerung der Position eines Cabriodaches gemäß Anspruch 1, **dadurch gekennzeichnet, dass** das Folienpotentiometer (4) zwischen zwei Lenkern (1; 2) angeordnet ist.

3. Vorrichtung zur Ermittlung und Steuerung der Position eines Cabriodaches gemäß Anspruch 2, **dadurch gekennzeichnet, dass** das Folienpotentiometer (4) Bestandteil einer Laufbuchse (5) ist, durch die der erste Lenker (1) mit einer Drehachse (3) drehbar in Verbindung steht, wobei die Drehachse (3) fest mit dem zweiten Lenker (2) verbunden ist.

4. Vorrichtung zur Ermittlung und Steuerung der Position eines Cabriodaches gemäß Anspruch 2, **dadurch gekennzeichnet, dass** das Folienpotentiometer (4) ringförmig ist.

5. Vorrichtung zur Ermittlung und Steuerung der Position eines Cabriodaches gemäß Anspruch 2, **dadurch gekennzeichnet, dass** das Folienpotentiometer (4) ringförmig um die äußere Wand der Laufbuchse (5) angeordnet ist, durch die der erste Lenker (1) mit der Drehachse (3) drehbar in Verbindung steht, wobei die Drehachse (3) fest mit dem zweiten Lenker (2) verbunden ist.

6. Vorrichtung zur Ermittlung und Steuerung der Position eines Cabriodaches gemäß Anspruch 1, **dadurch gekennzeichnet, dass** das Folienpotentiometer (4) aus flexiblem Material besteht.

7. Vorrichtung zur Ermittlung und Steuerung der Position eines Cabriodaches gemäß Anspruch 1, **dadurch gekennzeichnet, dass** die Dicke des Folienpotentiometer (4) kleiner 1 mm ist.

## Claims

1. An arrangement for determining and controlling the position of a convertible top with said arrangement consisting of a potentiometer (4), a control unit (6) and a cinematic system motor for the top (7), and the potentiometer (4) is used to register and transmit signals to said control unit (6) and said cinematic system motor for the top (7) is adjustable by the control unit (6), wherein the potentiometer (4) is a film potentiometer.

2. The arrangement for determining and controlling the position of a convertible top according to claim 1, wherein the film potentiometer (4) is installed between two guiding rods (1, 2).

3. The arrangement for determining and controlling the position of a convertible top according to claim 2, wherein the film potentiometer (4) is part of a guiding bush (5) via which the first guiding rod (1) is rotatably connected with a rotational axis (3) and said rotational axis (3) is fixed to the second guiding rod (2).

4. The arrangement for determining and controlling the position of a convertible top according to claim 2, wherein the film potentiometer (4) is shaped as a ring.

5. The arrangement for determining and controlling the position of a convertible top according to claim 2, wherein the film potentiometer (4) is arranged in a ring around the external wall of the guiding bush (5) via which the first guiding rod (1) is rotatably connected with the rotational axis (3) and said rotational axis (3) is fixed to the second guiding rod (2).

6. Arrangement for determining and controlling the position of a convertible top according to claim 1, wherein the film potentiometer (4) is made of flexible material.

7. Arrangement for determining and controlling the position of a convertible top according to claim 1, wherein the thickness of the film potentiometer (4) is less than 1 mm.

## Revendications

1. Dispositif pour la détection et la commande de la position d'un toit de cabriolet qui se compose d'un potentiomètre (4), une unité de commande (6) et un moteur de cinématique du toit (7), en notant que des signaux peuvent être détectés au moyen du potentiomètre (4) et transférés à l'unité de commande (6) et que le moteur de cinématique du toit (7) est réglable à l'aide de l'unité de commande (6), est **caractérisé en ce que** le potentiomètre (4) est un potentiomètre à film.

2. Dispositif pour la détection et la commande de la position d'un toit de cabriolet suivant la revendication 1 est **caractérisé en ce que** le potentiomètre à film (4) est positionné entre deux bielles (1; 2).

3. Dispositif pour la détection et la commande de la position d'un toit de cabriolet suivant la revendication 2 est **caractérisé en ce que** le potentiomètre à film (4) est un composant d'une boîte de glissement (5) grâce à laquelle la première bielle (1) est reliée de façon à pouvoir pivoter à un axe de rotation (3), l'axe de rotation (3) étant lié solidement à la deuxième bielle (2).

4. Dispositif pour la détection et la commande de la position d'un toit de cabriolet suivant la revendication 2 est **caractérisé en ce que** le potentiomètre à film (4) est en forme d'anneau.

5. Dispositif pour la détection et la commande de la position d'un toit de cabriolet suivant la revendication 2 est **caractérisé en ce que** le potentiomètre à film (4) est placé en forme d'anneau autour de la paroi extérieure de la boîte de glissement (5) grâce à laquelle la première bielle (1) est reliée de façon à pouvoir pivoter à un axe de rotation (3), l'axe de rotation (3) étant lié solidement à la deuxième bielle (2).

6. Dispositif pour la détection et la commande de la position d'un toit de cabriolet suivant la revendication 1 est **caractérisé en ce que** le potentiomètre à film (4) se compose d'un matériau flexible.

7. Dispositif pour la détection et la commande de la position d'un toit de cabriolet suivant la revendication 1 est **caractérisé en ce que** l'épaisseur du potentiomètre à film (4) est moins de 1 mm.
